# EUROPEAN PATENT APPLICATION

(11) **EP 4 394 546 A1**
(43) Date of publication of application: **03.07.2024**
(21) Application number: 22881285.5
(22) Date of filing: 07.10.2022
(51) Int. Cl.: G06F 1/16, G06F 1/20

(54) **ELECTRONIC DEVICE CAPABLE OF SLIDING**

(30) Priority: 13.10.2021 KR 20210135507
(71) Applicant: Samsung Electronics Co., Ltd., Suwon-si, Gyeonggi-do 16677 (KR)
(72) Inventor: JI, Youngmin, Suwon-si, Gyeonggi-do 16677 (KR); KWAK, Myunghoon, Suwon-si, Gyeonggi-do 16677 (KR); LEE, Wonho, Suwon-si, Gyeonggi-do 16677 (KR); LEE, Jookwan, Suwon-si, Gyeonggi-do 16677 (KR); CHO, Baekeun, Suwon-si, Gyeonggi-do 16677 (KR); KIM, Yangwook, Suwon-si, Gyeonggi-do 16677 (KR); HONG, Hyunju, Suwon-si, Gyeonggi-do 16677 (KR)
(74) Representative: HGF
(86) International application number: PCT/KR2022/015126
(87) International publication number: WO 2023/063656

(57) **Abstract**

An electronic device according to various embodiments disclosed in the present document comprises: a fixer housing; a mover housing which is coupled to be slidable with respect to the fixer housing; a moving motor which is fixed to one of the fixer housing and the mover housing; a gear member which is fixed to the other between the fixer housing and the mover housing and is engaged with the moving motor; an inner space which has a motor accommodation portion accommodating the moving motor, and is formed by the fixer housing and the mover housing; a printed circuit board comprising a processor and arranged in the inner space; a vent hole formed in at least one of the fixer housing and the mover housing to be connected to the motor accommodation portion; and an outer hole connecting the vent hole and the outside of the electronic device. Various other embodiments are possible.

## Description

### [Technical Field]

Various embodiments disclosed herein relate to an electronic device capable of executing a sliding operation.

### [Background Art]

Due to improved performance of electronic devices and increased integration of component arrangements, interest in heat dissipation structures that are capable of effectively dissipating heat generated in the electronic devices is increasing.

Improvements in performance required by applications running on electronic devices increase the computing power of electronic devices, which also leads in a gradual increase in heat generation.

Recently, with the development of display technology, flexible displays have been launched into the market. When using such a flexible display, a display with a variable display screen size may also be implemented. For example, a new concept electronic device including a display which increases or decreases a screen size through sliding, a display which is rolled around a specific mechanical object, or a display which is transformed through folding, has also been developed.

An electronic device, which is transformable in shape as described above, may be disadvantageous in terms of heat dissipation compared to an electronic device, which is non-transformable in shape, because electronic devices in the transformable electronic device may be arranged closer to each other than those in the non-transformable electronic device.

### [Disclosure of Invention]

### [Technical Problem]

A heat dissipation structure, which dissipates internal heat to the outside of an electronic device by using heat diffusion through conduction, mainly has been employed in portable electronic devices. This heat conduction method has a limitation and may not be able to effectively dissipate heat from high-performance electronic components.

When heat generated in an electronic device is not properly dissipated, a problem that limits the performance of electronic components (e.g., throttling) may occur and the performance of the electronic device may deteriorate. Usability may be significantly reduced when performance is excessively limited, and users may feel inconvenienced when performance is frequently limited.

Various embodiments disclosed herein are capable of providing an electronic device including a structure that is capable of effectively dissipating heat, especially in an electronic device which is transformable in shape.

### [Solution to Problem]

An electronic device according to various embodiments disclosed herein may include a fixed housing, a movable housing slidably coupled to the fixed housing, a driving motor fixed to one of the fixed housing or the movable housing, a gear member fixed to the remaining one of the fixed housing or the movable housing and engaged with the driving motor, an internal space defined by the fixed housing and the movable housing and including a motor accommodation portion, a printed circuit board including a processor and disposed in the internal space, a vent hole provided in at least one of the fixed housing and the movable housing and connected to the motor accommodation portion, and an external hole connecting the vent hole to the outside of the electronic device.

An electronic device according to various embodiments disclosed herein may include a fixed housing, a movable housing slidably coupled to the fixed housing, a driving motor fixed to one of the fixed housing or the movable housing, a gear member fixed to the remaining one of the fixed housing or the movable housing and engaged with the driving motor, an internal space defined by the fixed housing and the movable housing and including a motor accommodation portion, a printed circuit board including a processor and disposed in the internal space, a first vent hole provided in at least one of the fixed housing and the movable housing and connected to the motor accommodation portion, a second vent hole provided in at least one of the fixed housing and the movable housing at a position different from the first vent hole and connected to the internal space, and an external hole that connects the first vent hole and the second vent hole to the outside of the electronic device.

### [Advantageous Effects of Invention]

According to various embodiments disclosed herein, it is possible to provide a cooling structure that is capable of effectively controlling heat generation due to the operation of an electronic device. Accordingly, the usability of electronic devices can be improved and damage to electronic components due to heat can be reduced.

### [Brief Description of Drawings]

In connection with the description of the drawings, the same or similar components may be denoted by the same or similar reference numerals.
FIG. 1 is a block diagram of an electronic device according to various embodiments in a network environment.
FIGS. 2A and 2B are views illustrating various states of an electronic device according to various embodiments disclosed herein.
FIG. 3A is a cross-sectional view taken along line A-A of the electronic device illustrated in FIG. 2A, according to various embodiments disclosed herein.
FIG. 3B is a cross-sectional view taken along line B-B of the electronic device illustrated in FIG. 2B, according to various embodiments disclosed herein.
FIG. 4 is an exploded perspective view of an electronic device according to various embodiments disclosed herein.
FIG. 5 is a view illustrating the sliding state of an electronic device according to various embodiments disclosed herein.
FIG. 6A is a front perspective view of a driving motor according to various embodiments disclosed herein.
FIG. 6B is a rear perspective view of the driving motor according to various embodiments disclosed herein.
FIG. 6C is a perspective view illustrating a portion the driving motor and the electronic device according to various embodiments disclosed herein.
FIG. 6D is a perspective view illustrating a portion the driving motor and the electronic device according to various embodiments disclosed herein.
FIG. 7A is an enlarged perspective view of a portion where a vent hole according to various embodiments disclosed herein is formed.
FIG. 7B is a cross-sectional view taken along line A-A in FIG. 7A.
FIG. 7C is a view obtained when viewing FIG. 7B from a point in one direction.
FIG. 8 is a view illustrating the positions of vent holes according to various embodiments disclosed herein.
FIG. 9A is a perspective view illustrating air passages included in the fixed housing according to various embodiments disclosed herein.
FIG. 9B is a plan view illustrating the air passages included in the fixed housing according to various embodiments disclosed herein.
FIG. 9C is a view illustrating how a printed circuit board according to various embodiments disclosed herein is disposed.
FIG. 9D is a view illustrating how a vapor chamber according to various embodiments disclosed herein is disposed.
FIG. 9E is a cross-sectional view taken along line B-B in FIG. 9C.
FIG. 10 is a view illustrating the relationship between the vapor chamber and the driving motor according to various embodiments disclosed herein.
FIGS. 11A and 11B are views illustrating vent holes according to various embodiments disclosed herein.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

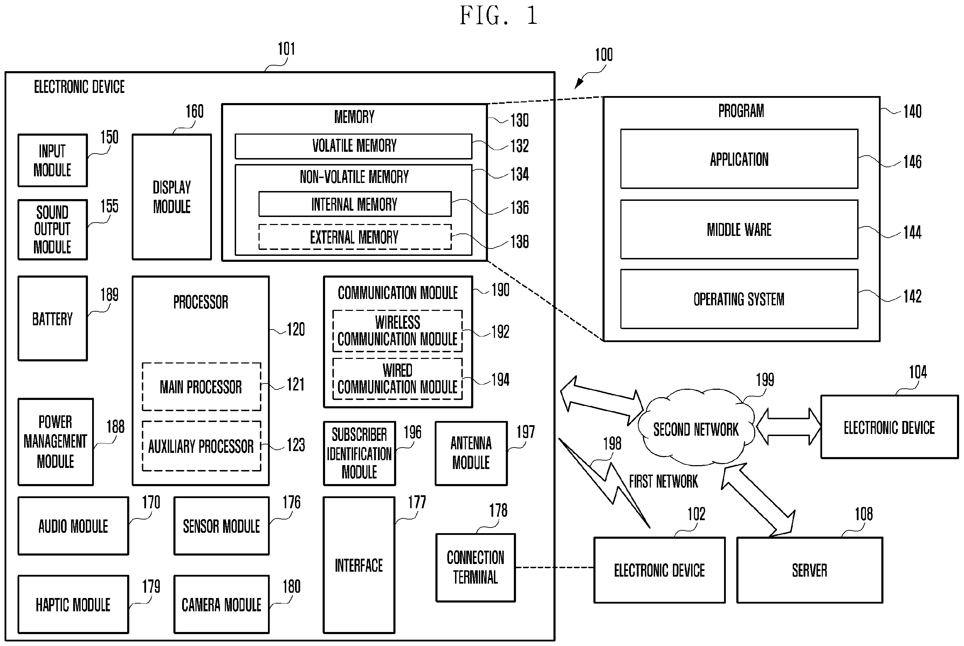

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

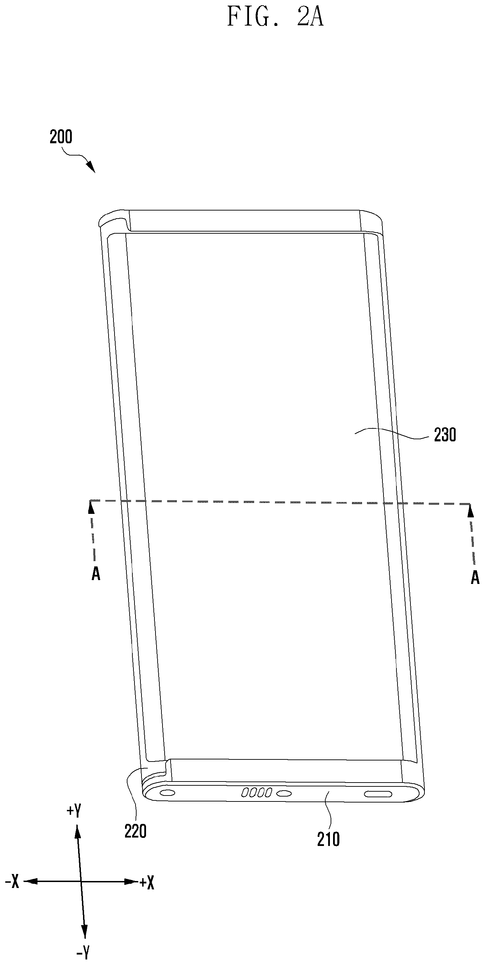

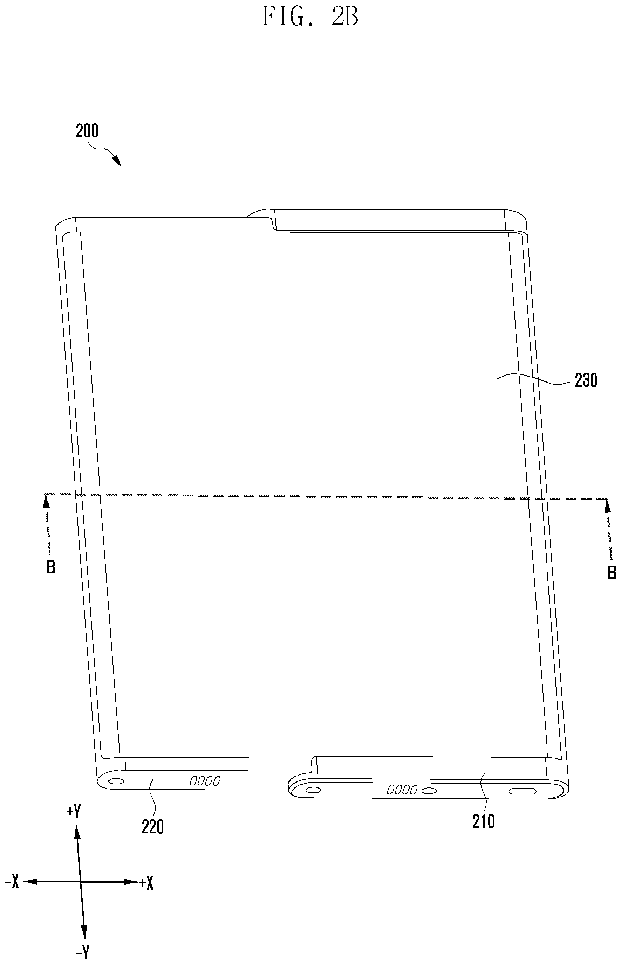

FIG. 2A is a perspective view of an electronic device according to various embodiments disclosed herein in a closed state. FIG. 2B is a perspective view of the electronic device according to various embodiments disclosed herein in an open state.

According to various embodiments, the electronic device 200 illustrated in FIGS. 2A and 2B may be one of the electronic devices 101 described with reference to FIG. 1. An electronic device to be described below may include at least one of the components described with reference to FIG. 1.

Referring to FIGS. 2A and 2B, the electronic device 200 may be an electronic device 200 configured to be capable of executing a sliding operation. In an embodiment, the sliding operation in the electronic device 200 may mean sliding of the second housing 220 relative to the first housing 210. The second housing 220 may slide with respect to the first housing 210 in the +X direction or in the -X direction with reference to FIGS. 2A and 2B. In the following description, the operation in which the second housing 220 slides in the +X direction will be defined as "slide-in", and the operation in which the second housing 220 slides in the -X direction will be defined as "slide-out".

The electronic device 200 according to various embodiments disclosed herein may be implemented such that the area of the flexible display module 230 visually exposed to the outside of the electronic device 200 is increased or decreased through a sliding method. In other words, the electronic device 200 may be configured such that a portion of the flexible display module 230 is moved into or moved out of the electronic device 200 through a sliding method.

According to various embodiments, the flexible display module 230 may be a flexible display module 230 capable of bending. In an embodiment, the flexible display module 230 may include a substrate made of a flexible material. For example, the flexible display module 230 may include a substrate made of a flexible polymer material such as polyimide (PI) or polyethylene terephthalate (PET). In addition, the display 230 may include a very thin substrate made of a glass material. The flexible display module 230 may be supported by a support member 250, and depending on the sliding of the second housing 220 relative to the first housing 210, the area of the portion visible to the outside may increase or decrease. In an embodiment, the flexible display module 230 may further include a touch detection circuit (e.g., a touch sensor). In addition, the flexible display module 230 may be coupled to or disposed adjacent to a pressure sensor capable of measuring the intensity (pressure) of a touch, and/or a digitizer configured to detect a magnetic field-type pen input device (e.g., a stylus pen). For example, the digitizer may include a coil member disposed on a dielectric substrate to detect an electromagnetically induced resonance frequency applied from a pen input device.

According to various embodiments, the electronic device 200 may be switched from a closed state (e.g., the state illustrated in FIG. 2A) to an open state (e.g., the state illustrated in FIG. 2B) by a sliding operation.

The closed state may mean the state in which the second housing 220 is completely slid in. The closed state may mean the state in which the second housing 220 is located at a position where the second housing can no longer be slid in. In the closed state, the ends of the first housing 210 and the ends of the second housing 220 may substantially coincide with each other. For example, as illustrated in FIG. 2A, the second housing 220 may not protrude from the first housing 210, or the first housing 210 may not protrude from the second housing 220.

The open state may mean the state in which the second housing 220 is completely slid out. The open state may mean the state in which the second housing 220 is located at a position where the second housing can no longer be slid out. The area of the flexible display module 230 that is exposed to the outside may be larger in the open state than in the closed state.

According to an embodiment, the sliding of the second housing 220 relative to the first housing 210 may be performed semi-automatically. For example, the sliding of the second housing 220 relative to the first housing 210 may be performed by a member (not illustrated) providing an elastic force in the sliding direction. In this case, when the second housing 220 is partially slid relative to the first housing 210, the second housing 220 may be slid by an elastic force applied to the first housing 210 and/or the second housing 220.

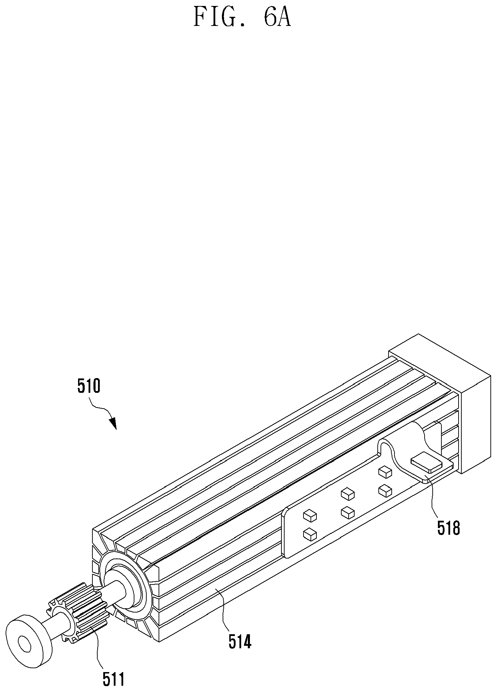

According to an embodiment, the sliding of the second housing 220 relative to the first housing 210 may be performed automatically. For example, the second housing 220 may be slid relative to the first housing 210 by a motor (e.g., the driving motor 510 in FIG. 6A). A motor, which causes the second housing 220 to slide, may operate in response to a signal input via various buttons and sensors included in the electronic device 200.

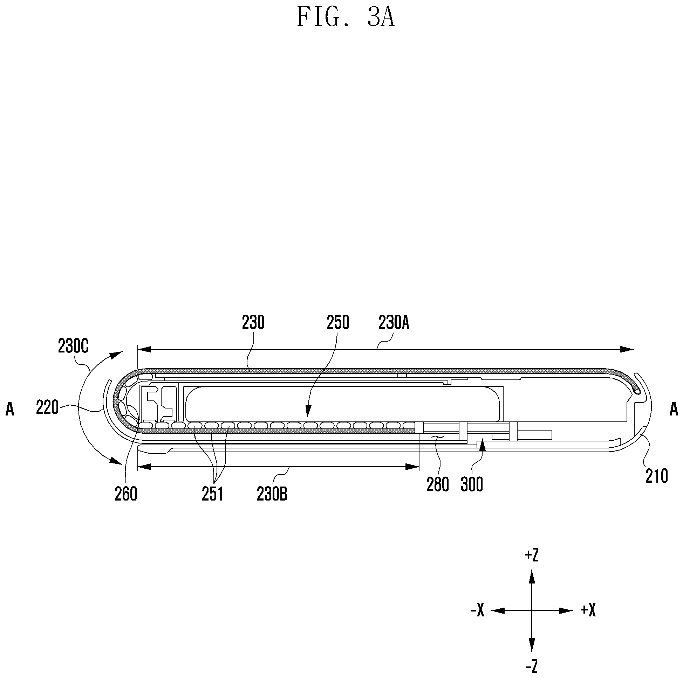

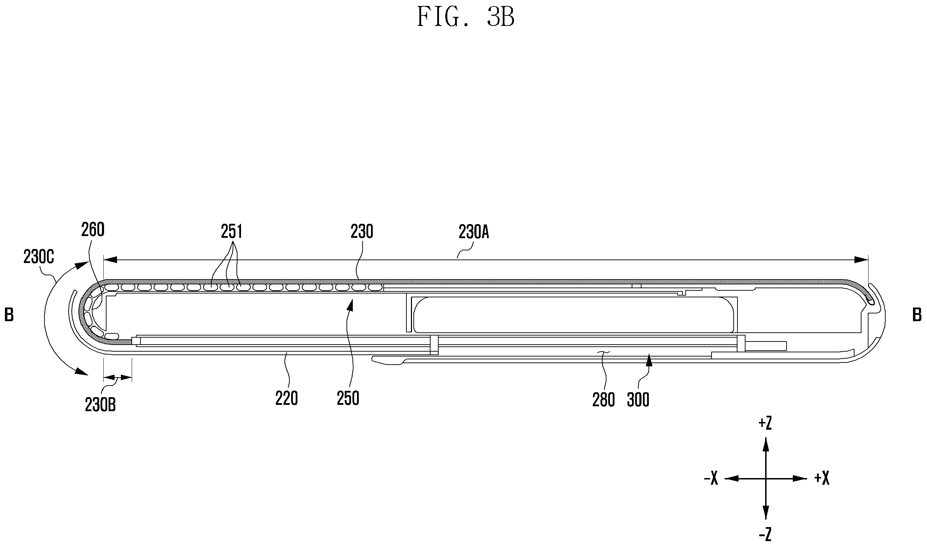

FIG. 3A is a cross-sectional view taken along line A-A of the electronic device illustrated in FIG. 2A, according to various embodiments disclosed herein. FIG. 3B is a cross-sectional view taken along line B-B of the electronic device illustrated in FIG. 2B, according to various embodiments disclosed herein.

According to various embodiments, the flexible display module 230 may include a plurality of areas. The plurality of areas to be described below may be areas divided depending on the state of the flexible display module 230 or the portion where the flexible display module 230 is located in the electronic device 200. For example, the flexible display module 230 may include a first area 230A, which is an area where the flexible display module 230 is exposed to the outside of the electronic device 200, a second area 230B, which is an area where the flexible display module 230 is accommodated in the accommodation space in the electronic device 200, and a third area 230C, which is a transformable (e.g., bending) area interconnecting the first area 230A and the second area 230B. In an embodiment, the second area 230B of the flexible display module 230 may be an area where a portion of the flexible display module 230 is accommodated in the accommodation space 280. The accommodation space 280 may be a space surrounded by various mechanical elements of the electronic device 200. In an embodiment, depending on the shape of the housing surrounding the flexible display module 230, a portion of the third area 230C may also be visible to the outside of the electronic device 200. For example, as illustrated in FIGS. 3A and 3B, a portion of the second housing 220 may cover the bending area. Accordingly, a portion of the third area 230C that is not covered by the second housing 220 may also be exposed to the outside of the electronic device 200. Each area of the flexible display module 230 described above is only divided for convenience of description, and may not be an actually visually distinct area.

In an embodiment, the third area 230C may be an area where a portion of the flexible display module 230 is transformed to correspond to the outer shape of the second housing 220. For example, as illustrated in FIGS. 3A and 3B, the outer shape of the second housing 220 may partially include a round shape. The third area 230C may be an area where a portion of the flexible display module 230 is bent to correspond to the round shape of the second housing 220.

In an embodiment, the flexible display module 230 may be supported by the support member 250. The sliding of the support member 250 may be guided by guide rails 260. The guide rails 260 may be provided to correspond to the round shape of the second housing 220 to allow the support member 250 to support the third area 230C, and the support member 250 may be bent along the guide rails 260 corresponding to the round shape. For example, when the support member 250 includes the multiple bars 251, the distance between adjacent ones of the multiple bars 251 in the portion where the third area 230C is supported may be increased compared to that in the portion where the first area 230A or the second area 230B of the flexible display module 230 is supported, and the support member 250 may be bent as a whole. The support member 250 may support the third area 230C of the flexible display module 230 in the state of being bent along the guide rails 260.

As the sliding operation is executed in the electronic device 200, the sizes of the first area 230A and the second area 230B may be variable. For example, the size of the first area 230A in the closed state (e.g., the state illustrated in FIG. 2A) may be smaller than the size of the first area 230A in the open state (e.g., the state illustrated in FIG. 2B). The size of the second area 230B in the closed state may be larger than the size of the second area 230B in the open state.

According to various embodiments, when the second housing 220 is slid out, the flexible display module 230 supported by the support member 250 may be slid, the first area 230A may increase, and the second area 230B may decrease.

According to various embodiments, when the second housing 220 is slid in, the flexible display module 230 supported by the support member 250 may be slid, the first area 230A may decrease, and the second area 230B may increase.

In this way, in the electronic device 200 according to various embodiments disclosed herein, a portion of the flexible display module 230 may be moved into or moved out of the accommodation space 280, and the area of the flexible display module 230 seen from the outside of the electronic device 200 may increase or decrease. Various operations such as adjusting the amount of displayed information or adjusting the aspect ratio of a displayed content screen may be performed in response to a change in the area of the flexible display module 230 seen from the outside.

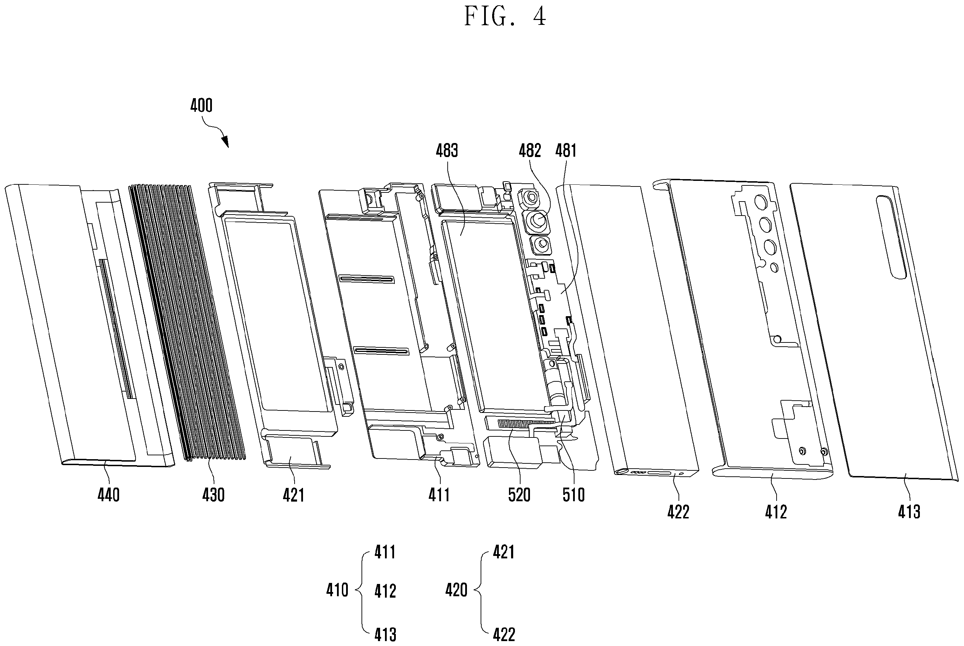

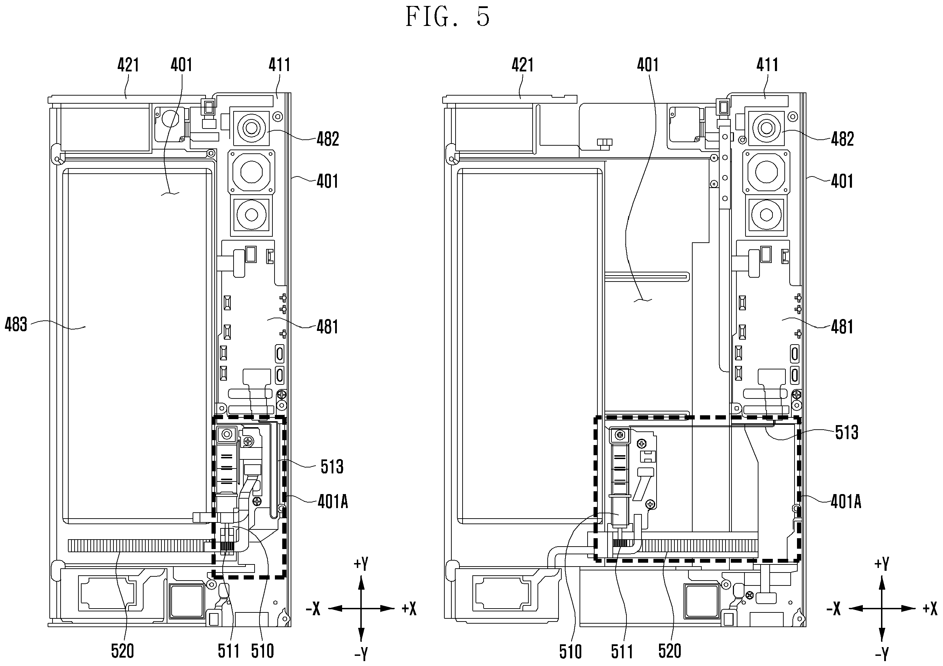

FIG. 4 is an exploded perspective view of an electronic device according to various embodiments disclosed herein. FIG. 5 is a view illustrating the sliding state of an electronic device according to various embodiments disclosed herein.

In the following description, the same member numbers will be used for all identical or similar components unless otherwise specified.

An electronic device 400 according to various embodiments disclosed herein may be an embodiment of the electronic devices 101 and 200 described with reference to FIG. 1 and FIGS. 2A to 3B. The electronic device 400 may include a fixed housing 410 (e.g., the first housing 210 in FIG. 2A) and a movable housing 420 (e.g., the second housing 220 in FIG. 2A). The fixed housing 410 and the movable housing 420 may be slidably coupled to each other. Depending on the sliding of the movable housing 420 with respect to the fixed housing 410, the display area of the display 440 (e.g., the display area 230A in FIGS. 3A and 3B) may increase or decrease. Here, the display area may refer to a portion of the display 440 exposed to the outside of the electronic device 400. For example, with reference to FIG. 5, when the movable housing 420 is slid in the -X direction with respect to the fixed housing 410, the display area may increase. In this way, the operation where the movable housing 420 is slid in the direction of increasing the display area is hereinafter defined as a "slide-out operation". Conversely, with reference to FIG. 5, when the movable housing 420 is slid in the +X direction with respect to the fixed housing 410, the display area may decrease. In this way, the operation where the movable housing 420 is slid in the direction of decreasing the display area is hereinafter defined as a "slide-in operation".

The display 440 of the electronic device 400 according to various embodiments disclosed herein may be a flexible display 440 which is at least partially made of a flexible material. In response to the slide-out or slide-in operation in the electronic device 400, a partial area of the display 440 (e.g., third area 230C, the accommodated area 230C in FIGS. 2A and 2B) may be accommodated inside the electronic device 400. In an embodiment, the display 440 may be at least partially supported by a first support 411 and a support member 430.

Referring to FIG. 4, the electronic device 400 may include a display 440, a support member 430, a movable housing 420, a fixed housing 410, and a plurality of electronic components (e.g., a printed circuit board 481, a camera module 482, and a battery 483).

According to various embodiments, the support member 430 (e.g., the support member 250 in FIGS. 3A and 3B) may support the display 440 that moves in response to the slide-out or slide-in operation. The support member 430 may include a bendable structure to support the bent portion of the display 440. For example, the support member 430 (e.g., the support member 250 in FIGS. 3A and 3B) may include a structure in which a plurality of bars are accommodated in a rail.

According to various embodiments, the movable housing 420 and the fixed housing 410 may be components that support various mechanical objects or electrical objects (electronic components) included in the electronic device 400 while defining the exterior of the electronic device 400. The movable housing 420 and the fixed housing 410 may be distinguished based on a relative movement according to the slide-out or slide-in operation. For example, the movable housing 420 may be a component that moves relative to the fixed housing 410 in response to a sliding operation. The movable housing 420 and the fixed housing 410 may be coupled to each other via a plurality of components.

For example, the fixed housing 410 may include a first support 411 that supports some of the various electronic components, a rear cover 412 that is at least partially coupled to the first support 411, and a cover member 413 that is at least partially fixed to the rear cover 412. The movable housing 420 may include a second support 421 that supports some of the various electronic components and a slide cover 422 that is at least partially coupled to the second support 421.

In various embodiments, the first support 411 of the fixed housing 410 may accommodate a printed circuit board 481 including a processor (e.g., the processor 120 of FIG. 1) of the electronic device 400. The first support 411 may support the printed circuit board 481. In some embodiments, the first support 411 may support a camera module 482 (e.g., the camera module 180 in FIG. 1) of the electronic device 400. The battery 483 of the electronic device 400 may be accommodated in a second support 421 of the movable housing 420. The second support 421 may support the battery 483.

According to various embodiments, the internal space 401 of the electronic device 400 may be defined by the fixed housing 410 and the movable housing 420. The internal space 401 may be a space surrounded by the fixed housing 410 and the movable housing 420. Various mechanical objects and electrical objects (electronic components) constituting the electronic device 400 may be disposed in the internal space 401. For example, the above-described printed circuit board 481, camera module 482, and battery 483 may be supported on the first support 411 or the second support 421 and accommodated in the internal space 401.

The above described components of the fixed housing 410 and the movable housing 420 are merely examples, and the fixed housing 410 and the movable housing 420 may include various components in addition to the above-described components, or some of the above-described components may be omitted. In addition, the components supported by the fixed housing 410 and the movable housing 420 are merely examples and may be changed in various other ways.

According to various embodiments, the electronic device 400 may include a driving motor 510 for a sliding operation. When the driving motor 510 operates in response to an electrical signal applied thereto, the movable housing 420 may slide relative to the fixed housing 410 by the driving motor 510.

In an embodiment, the movable housing 420 may be slid with respect to the fixed housing 410 due to the interlocking between the driving motor 510 and the gear member 520 engaged with the gear 511 of the driving motor 510. The driving motor 510 and the gear member 520 may be fixed to mechanical objects that move relative to each other. For example, the driving motor 510 may be fixed to the second support 421 of the movable housing 420, and the gear member 520 may be fixed to the first support 411 of the fixed housing 410. In another embodiment, the driving motor 510 may be fixed to the first support 411 of the fixed housing 410, and the gear member 520 may be fixed to the second support 421 of the movable housing 420. The driving motor 510 and the gear member 520 may be fixed in various ways. For example, the driving motor 510 and the gear member 520 may be respectively fixed to relatively moving components in various ways, such as bolting, riveting, welding, or fixing through an adhesive member.

Referring to FIG. 5, the driving motor 510 may include a pinion gear 511, and the gear member 520 may include a rack gear 520 engaged with the pinion gear. The rack gear 520 may extend along the sliding direction in the electronic device 400 (e.g., the X-axis direction in FIG. 5). When the driving motor 510 operates, the movable housing 420 may be slid with respect to the fixed housing 410 by the interlocking between the rack gear and the pinion gear. When the driving motor 510 is fixed to the movable housing 420, the driving motor 510 may be slid with respect to the fixed housing 410 as the movable housing 420 moves.

According to various embodiments, the driving motor 510 may be accommodated in the motor accommodation portion 401A. The motor accommodation unit 401A may be one of the areas included in the internal space 401 of the electronic device 400. As illustrated in FIG. 5, when the driving motor 510 is disposed in a first direction (e.g., the -Y axis direction in FIG. 5) with respect to the printed circuit board 481, the motor accommodation portion 401A may be a space provided in the first direction with respect to the printed circuit board 481.

In an embodiment, the driving motor 510 and the printed circuit board 481 may be connected to each other by a connecting member 513. The connecting member 513 may transmit power for the operation of the driving motor 510 and a control signal for controlling the operation of the driving motor 510. The connecting member 513 may be made of a flexible material. In response to the sliding operation in the electronic device 400, the distance between the printed circuit board 481 and the driving motor 510 may increase or decrease. Since the connecting member 513 is made of a deformable material, the connection between the driving motor 510 and the printed circuit board 481 can be maintained even when the distance between the printed circuit board 481 and the driving motor 510 changes. The connecting member 513 may be, for example, a flexible printed circuit board (FPCB). As illustrated in FIG. 5, in the slide-in state, the connecting member 513 may be accommodated in the motor accommodation portion 401A in a partially bent state. In the slide-out state, the connecting member 513 may maintain the connection state between the printed circuit board 481 and the driving motor 510 while being partially deformed.

Referring to FIG. 5, when the movable housing 420 is slid out with respect to the fixed housing 410, the size (or volume) of the internal space 401 may increase. Since separation spaces are formed between the various mechanical objects or electrical objects supported in the movable housing 420 and the various mechanical objects or electrical objects supported in the fixed housing 410, the internal space 401 may increase. In the case of the motor accommodation portion 401A as well, when a portion of the space occupied by the driving motor 510 is emptied depending on the relative movement of the driving motor 510, the size (or volume) of the space may increase. In contrast, when the movable housing 420 is slid in with respect to the fixed housing 410, the size (or volume) of the internal space 401 may decrease. When the spaces between the various mechanical objects or electrical objects supported in the movable housing 420 and the various mechanical objects or electrical objects supported in the fixed housing 410 are filled, the internal space 401 may decrease. In the case of the motor accommodation portion 401A as well, when the driving motor 510 occupies the space in the motor accommodation portion 401A, the motor accommodation portion 410A may decrease.

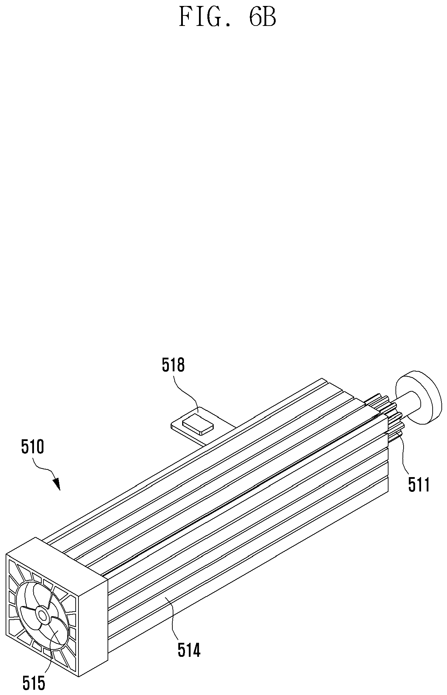

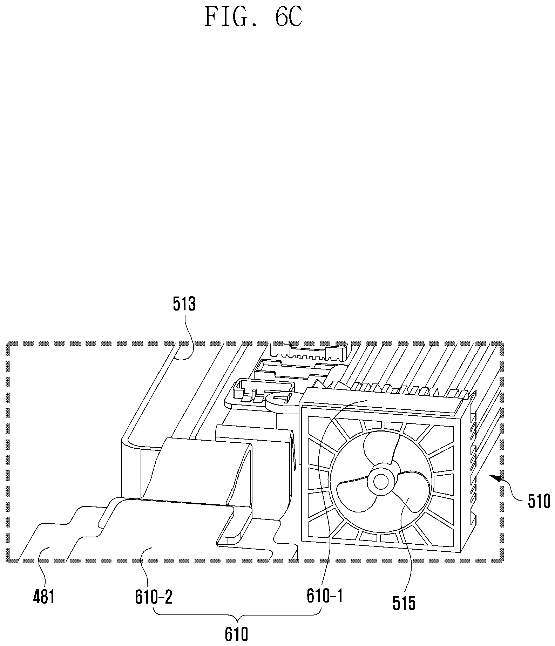

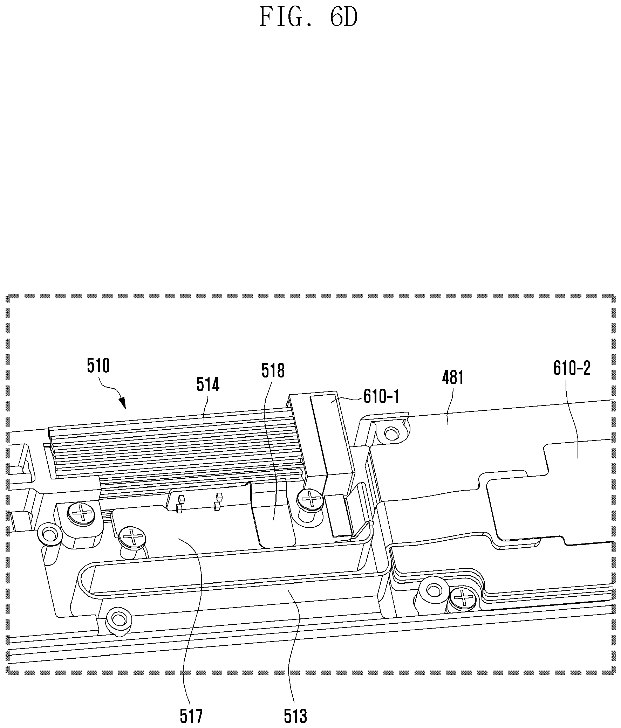

FIG. 6A is a front perspective view of a driving motor according to various embodiments disclosed herein. FIG. 6B is a rear perspective view of the driving motor according to various embodiments disclosed herein. FIG. 6C is a perspective view illustrating a portion the driving motor and the electronic device according to various embodiments disclosed herein. FIG. 6D is a perspective view illustrating a portion the driving motor and the electronic device according to various embodiments disclosed herein.

According to various embodiments, the driving motor 510 may include a gear 511, a heat sink 514, and a motor connecting member 518.

In an embodiment, the gear 511 of the driving motor 510 may be engaged with the gear member 520. The gear 511 of the driving motor 510 may be a pinion gear, and the gear member 520 may include a rack gear. The driving motor 510 and the gear member 520 may be respectively fixed to the fixed housing 410 and the movable housing 420 which are movable relative to each other. When the driving motor 510 operates, the movable housing 420 may move relative to the fixed housing 410 due to engagement between the gear of the driving motor 510 and the gear member 520.

In an embodiment, the heat sink 514 of the driving motor 510 may dissipate heat generated by the operation of the driving motor 510. A highly conductive material is filled or applied between the driving motor 510 and the heat sink 514 such that heat generated due to the operation of the driving motor 510 can be effectively transferred to the heat sink 514. For example, materials such as a thermal interface material (TIM) or a thermal compound may be filled or applied between the driving motor 510 and the heat sink 514. The heat sink 514 may be made of a metal material with high thermal conductivity. The heat sink 514 may be fabricated in a structure with a large surface area so that heat can be effectively dissipated through the heat sink 514. For example, as illustrated in FIGS. 6A and 6B, the heat sink 514 may include fin structures that are spaced apart from each other and extend in a radial direction from the center of the heat sink 514. In the case of FIGS. 6A and 6B, the heat sink 514 is illustrated in a simplified form for convenience of description, but the heat sink 514 may have a larger number of heat sinks 514 fabricated with a thinner thickness than that illustrated in the drawings and arranged at small intervals from each other. In this way, the heat sink 514 may be fabricated in a structure with a large surface area compared to its volume due to the structure in which the fins extend and are spaced apart from each other.

Referring to FIGS. 6C and 6D , the heat sink 514 of the driving motor 510 and electronic components included in the electronic device 400 may be connected to each other by heat dissipation sheets 610 made of a material with high thermal conductivity. For example, the heat dissipation sheets 610 may be in contact with the heat sink 514 and electronic components included in the electronic device 400, wherein a heat dissipation sheet 610-1, which is in contact with the heat sink 514, and a heat dissipation sheet 610-2, which is in contact with the electronic components, are thermally connected to each other by a heat dissipation sheet (not illustrated) coupled to the connecting member 513, which connects the printed circuit board 581 and the driving motor 510 to each other. In addition, the heat dissipation sheets 610 made of a material capable of transferring heat may thermally connect the electronic components to the heat sink 514 in various ways.

By connecting the electronic components, which is high in calorific value during operation, to the heat sink 514 via the heat dissipation sheets 610, heat from the electronic components may be conducted via the heat dissipation sheets 610 and transferred to the heat sink 514. For example, the heat dissipation sheets 610 may connect the printed circuit board 481 on which a processor is disposed to the heat sink 514.

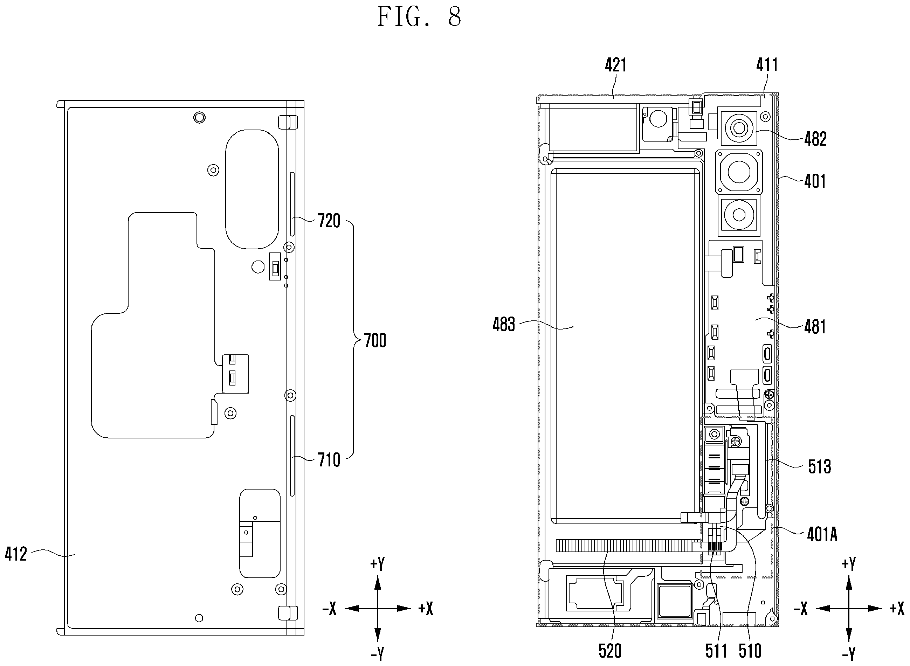

In the electronic device 400 disclosed herein, a vent hole corresponding to an external air passage (e.g., the vent hole 710 in FIG. 8) may be provided adjacent to the connecting member 513 to which the heat dissipation sheets are coupled. Accordingly, the heat of the heat dissipation sheets coupled to the connecting member 513 can be effectively cooled by the air flowing through the vent hole.

In an embodiment, the driving motor 510 may include a cooling fan 515. The cooling fan 515 may form an air flow that can cool the heat sink 514.

In an embodiment, the connecting member 513 may connect the driving motor 510 to the printed circuit board 481 of the electronic device 400. The connecting member 513 may be made of a flexible material. Power for driving the driving motor 510 and a signal for controlling the operation of the driving motor 510 may be transmitted through the connecting member 513. For example, the driving motor 510 may be connected to each of the battery 483 and the printed circuit board 481 via the connecting member 513.

The structure of the driving motor 510 described above with reference to FIGS. 6A and 6B is merely an example, and other structures of the driving motor 510 may be used to implement sliding in the electronic device 400.

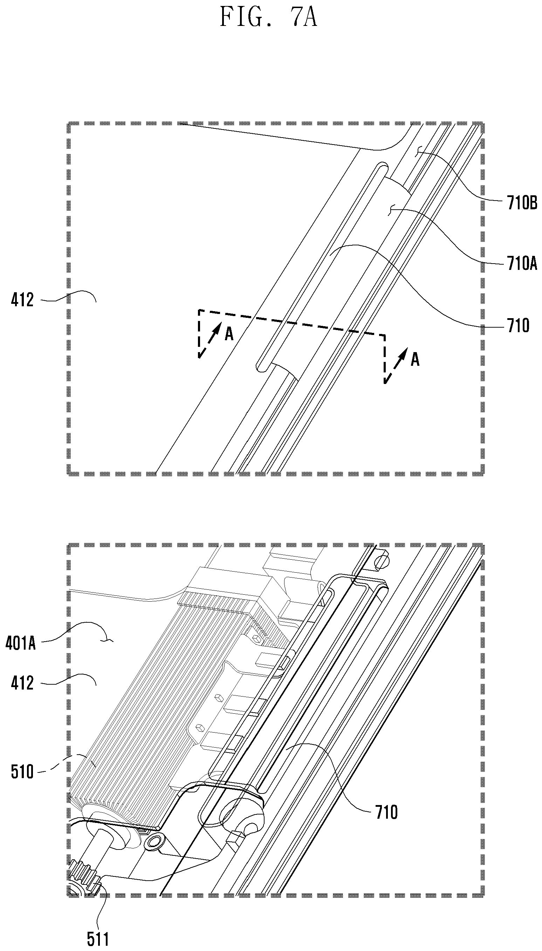

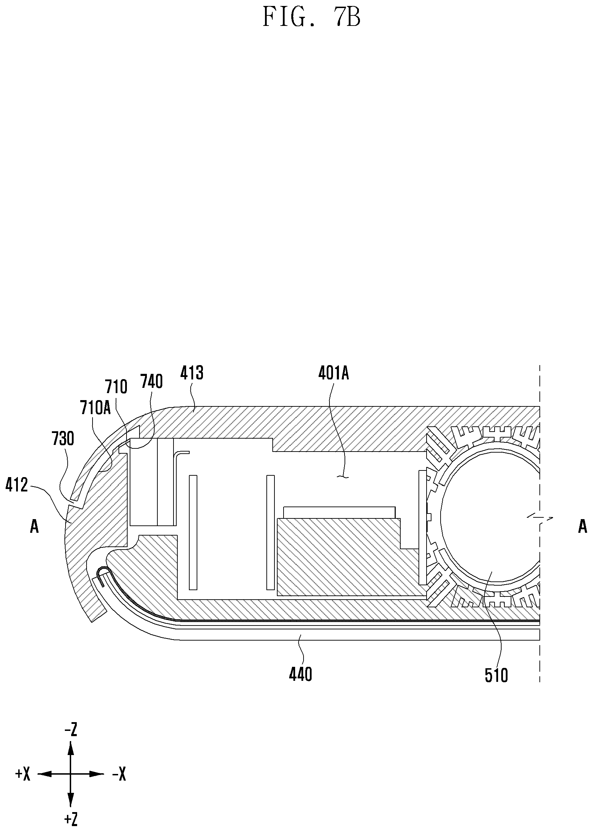

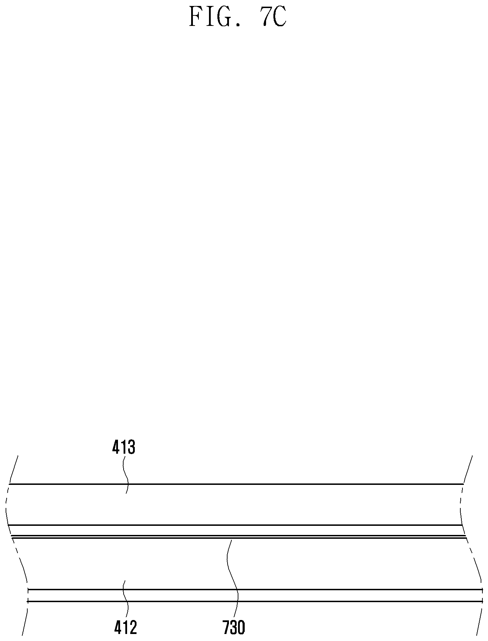

FIG. 7A is an enlarged perspective view of a portion where a vent hole according to various embodiments disclosed herein is formed. FIG. 7B is a cross-sectional view taken along line A-A in FIG. 7A. FIG. 7C is a view obtained when viewing FIG. 7B from a point in one direction. FIG. 7A is a perspective view in the state in which the cover member 413 is removed, and FIGS. 7B and 7C are views in the state in which with the cover member 413 is assembled. FIG. 8 is a view illustrating the positions of vent holes according to various embodiments disclosed herein. FIG. 7C is a view obtained when viewing FIG. 7B from a point in the +X-axis direction.

According to various embodiments, the fixed housing 410 may include vent holes 700. For example, vent holes 700 may be provided in the rear cover 412 of the fixed housing 410. The vent holes may be openings provided in the rear cover 412. The vent holes 700 may be connected to the internal space 401 of the electronic device 400. In the above description, it has been described that the vent holes 700 are provided in the rear cover 412, but the vent holes 700 may be provided in various mechanical objects included in the electronic device 400.

In an embodiment, the vent holes 700 may include a first vent hole 710 and a second vent hole 720 located at different positions. The first vent hole 710 and the second vent hole 720 may be openings provided at different positions in the rear cover 412. For example, the first vent hole 710 may be provided in the rear cover 412 to be connected to the motor accommodation portion 401A. Referring to FIG. 8 , the first vent hole 710 may be provided in the rear cover 412 in a first direction (e.g., the -Y axis direction in FIG. 8) with respect to the printed circuit board 481. The second vent hole 720 may be provided in the rear cover 412 in a second direction (e.g., the Y-axis direction in FIG. 8) opposite to the first direction with respect to the printed circuit board 481.

Hereinafter, the description will be made based on the first vent hole 710. Unless otherwise specified, the structure and components of the second vent hole 720 may be understood to be similar to those of the first vent hole 710.

According to various embodiments, through the vent holes 700, the air in the internal space 401 may flow out of the electronic device 400 or the external air of the electronic device 400 may flow into the internal space 401 of the electronic device 400.

According to various embodiments, as illustrated in FIG. 7B, a foreign matter prevention member 740 may be disposed in the first vent hole 710. The foreign matter prevention member 740 may include a structure that is capable of blocking external foreign matter while maintaining the flow of air. For example, the foreign matter prevention member 740 may include a mesh structure.

In an embodiment, the first vent hole 710 may be connected to an external hole 730 connected to the outside of the electronic device 400. The fixed housing 410 may include the external hole 730. The external hole 730 may be a hole connected to the outside of the electronic device 400. Referring to FIG. 7C, the external hole 730 may include a slit-shaped hole provided between the rear cover 412 and the cover member 413 of the fixed housing 410. The external hole 730 may be a step space between the rear cover 412 and the cover member 413. In some embodiments, at least one of the rear cover 412 and the cover member 413 may be concave to provide the external hole 730. When the external hole 730 is connected to the first vent hole 710, the internal space 401 of the electronic device 400 can be connected to the outside.

Referring to FIG. 7A, in the rear cover 412, the portion 710A where the first vent hole 710 is provided may be concave compared to another portion. In other words, a step may be formed between the portion 710A where the first vent hole 710 is provided and the other portion 710B of the rear cover 412. When the cover member 413 is coupled to the rear cover 412, a space through which air can flow may be provided by this step. Referring to FIG. 7B, the external hole 730 provided between the rear cover 412 and the cover member 413 and the first vent hole 710 provided in the rear cover 412 may be connected to each other through this step space.

Next, the inflow and outflow of air through the vent hole 700 and the cooling action by the air will be described.

According to various embodiments, the size of the internal space 401 of the electronic device 400 may increase or decrease depending on the sliding operation in the electronic device 400. As the volume of the internal space 401 changes, the pressure of the internal space 401 may increase or decrease. For example, when the volume of the internal space 401 increases in the slide-out state, the pressure of the internal space 401 may decrease. In this case, air may predominantly flow from the outside of the electronic device 400 into the electronic device 400 through the vent holes 700. In contrast, when the volume of the internal space 401 decreases in the slide-in state, the pressure of the internal space 401 may increase. In this case, air may predominantly flow out to the outside of the electronic device 400 from the internal space 401 through the vent holes 700.

Various electronic components disposed in the internal space 401 of the electronic device 400 may generate heat when the electronic components operate. The temperature of the internal space 401 may increase due to the heat generated due to the operation of the electronic components. In various embodiments disclosed herein, the air in the internal space 401 may flow out to the outside or external air may flow into the internal space 401 through the vent holes 700 connected to the internal space 401. In this way, the electronic device 400 may be cooled since air with a temperature increased as the electronic device 400 operates flows out from the electronic device 400, or external air with a relatively low temperature outside the electronic device 400 flows into the internal space 401.

In various embodiments disclosed herein, the volume of the internal space 401 may increase or decrease depending on the relative movement between the movable housing 420 and the fixed housing 410. As the volume of the internal space 401 increases or decreases, air may flow smoothly through the vent holes 700 connected to the internal space 401. Cooling may be achieved by using air flow according to the increase or decrease in volume of the internal space 401. In the slide-out operation, cooling may be achieved since air heated by heat generated from electronic components flows out to the outside of the electronic device 400. In the slide-in operation, cooling may be achieved since external air with a relatively low temperature flows into the internal space 401. In this way, effective cooling may be performed by using the change in volume of the internal space 401 due to the sliding operation.

The first vent hole 710 may be connected to the motor accommodation portion 401A where the driving motor 510 is accommodated. The driving motor 510 may act as a heat source by generating heat while being operated. As the driving motor 510 operates, the movable housing 420 moves with respect to the fixed housing 410 so that the volume of the motor receiving portion 401A can be increased or decreased. Depending on the change in volume of the motor accommodation portion 401A, air may smoothly flow in or out through the first vent holes 710 connected to the motor accommodation portion 401A. For example, in the slide-out operation, the volume of the motor accommodation portion 401A increases so that external air with a relatively low temperature may flow into the motor accommodation portion 401A through the first vent hole 710. Air flowing into the motor accommodation portion 401A from the outside may lower the temperature of the driving motor 510 disposed in the motor receiving portion 401A. In contrast, in the slide-in operation, the volume of the motor accommodation portion 401A decreases, so that air in the motor accommodation portion 401A may flow out to the outside. Cooling may be achieved since the air in the motor accommodation portion 401A, of which the temperature has increased due to the operation of the driving motor 510, flows out to the outside.

According to various embodiments, the inflow or outflow of air may occur depending on the temperature change of the internal space 401 due to the operation of the electronic device 400. The temperature of the internal space 401 may change depending on the operating state of the electronic device 400. For example, when an application or function requiring high performance is performed, the temperature of the internal space 401 may increase. When an application or function requiring high performance is interrupted, the temperature of the internal space 401 may relatively decrease. When the temperature of the internal space 401 increases due to the operation of the electronic device 400, the volume of air occupying the internal space 401 may increase, and air may predominantly flow out through the vent hole 700. When the temperature of the internal space 401 decreases due to the operation of the electronic device 400, the volume of air occupying the internal space 401 may decrease, and air may predominantly flow in through the vent holes 700. Cooling may be performed by inflow or outflow of air through the vent holes 700 connected to the internal space 401. As illustrated in FIG. 8, the vent holes 700 may be located adjacent to the printed circuit board 481. Among the electronic components disposed on the printed circuit board 481, there may be electronic components that generate a lot of heat depending on the operation of the electronic device 400. For example, a processor disposed on the printed circuit board 481 may generate a lot of heat depending on its operation. Since the vent holes 700 are disposed adjacent to the printed circuit board 481 on which the processor is disposed, cooling of the processor may be achieved by the flow of air flowing out or in through the vent hole 700.

In addition, the second vent hole 720 disposed in the second direction with respect to the printed circuit board 481 may be located adjacent to the camera module 482 disposed in the second direction with respect to the printed circuit board 481. An image sensor included in the camera module 482 may generate a lot of heat depending on its operation. Cooling of the camera module 482 may be achieved by the flow of air flowing out or in through the second vent hole 720.

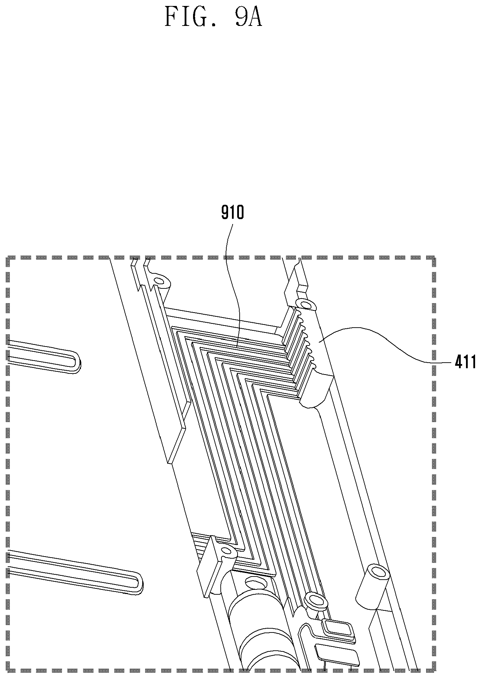

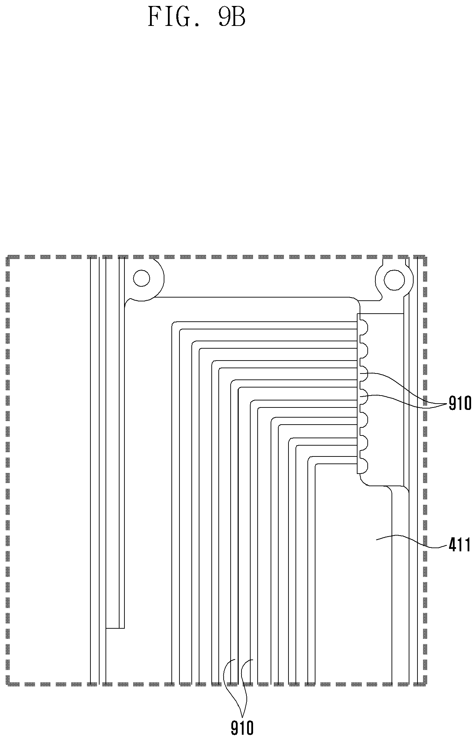

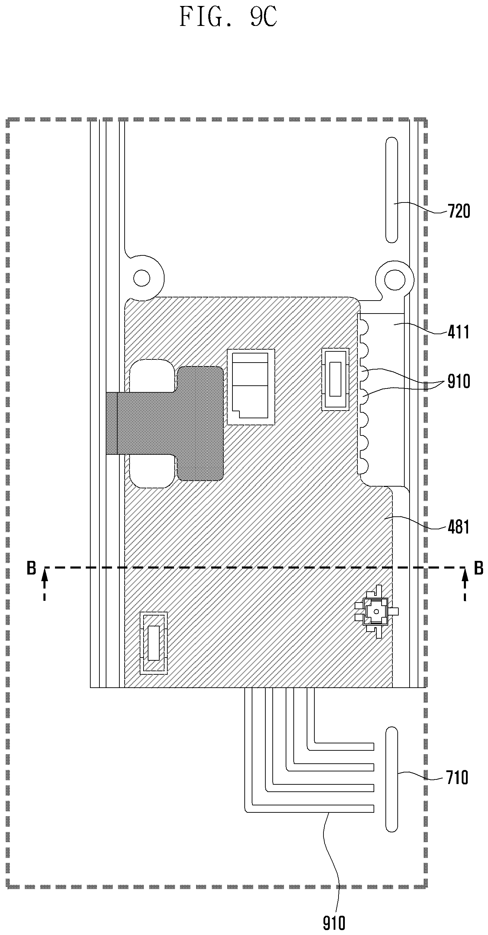

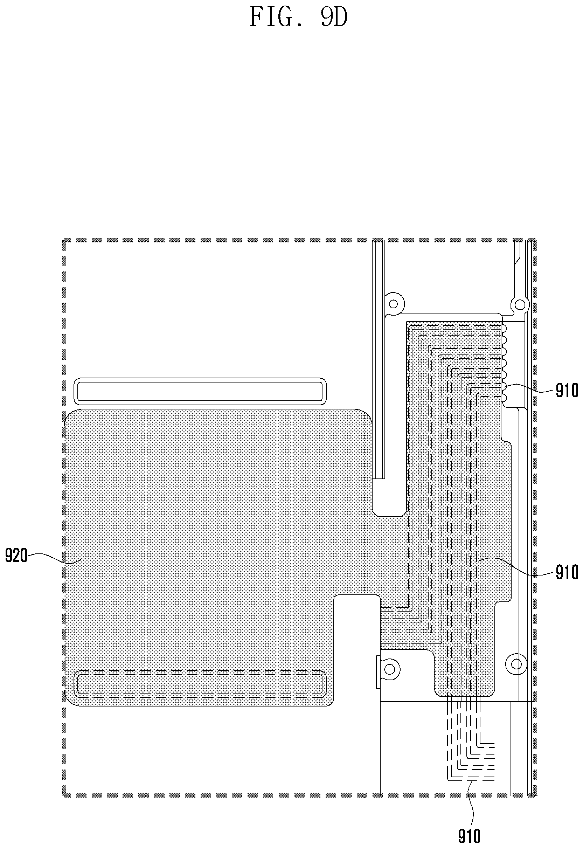

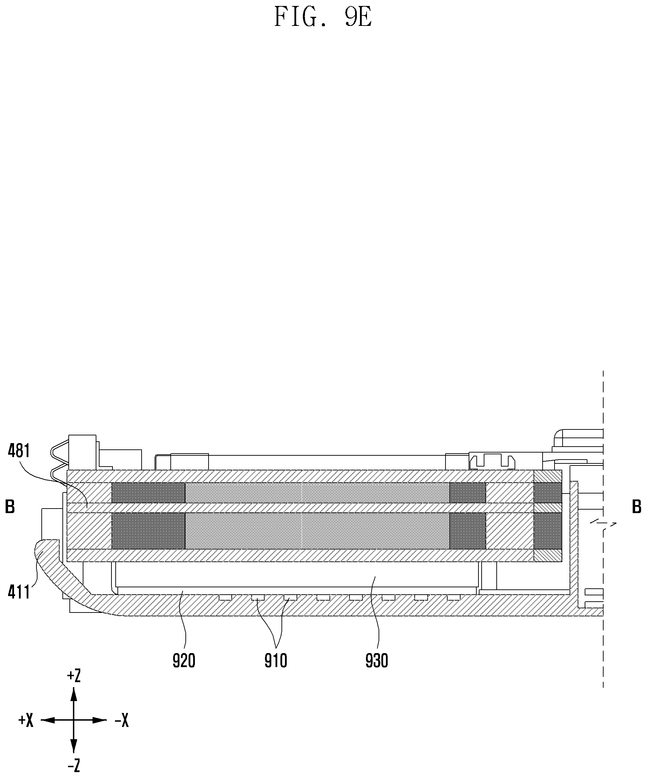

FIG. 9A is a perspective view illustrating air passages included in the fixed housing according to various embodiments disclosed herein. FIG. 9B is a plan view illustrating air passages included in the fixed housing according to various embodiments disclosed herein. FIG. 9C is a view illustrating how a printed circuit board according to various embodiments disclosed herein is disposed. FIG. 9D is a view illustrating how a vapor chamber according to various embodiments disclosed herein is disposed. FIG. 9E is a cross-sectional view taken along line B-B in FIG. 9C.

According to various embodiments, the fixed housing 410 may include air passages 910. The air passages 910 may be portions provided to guide the flow of air in the internal space 401. Referring to FIG. 9A, the air passages 910 may be provided concavely in the first support 411 of the fixed housing 410.

In an embodiment, the air passages 910 may be provided in an area corresponding to the printed circuit board 481. Referring to FIGS. 9B and 9C, the air passages 910 may be provided in an area of the first support 411 facing the printed circuit board 481. Since the air passages 910 are portions that guide the flow of air, the printed circuit board 481 and the various electronic components disposed on the printed circuit board 481 may be cooled by the flow of air passing through the air passages 910.

According to various embodiments, as illustrated in FIG. 9C, the end portions of the air passages 910 may be disposed adjacent to the vent holes 700. In the case of FIG. 9C, the positions of the vent holes 700 are conceptually illustrated to describe the positional relationship between the vent holes 700 and the air passages 910. The flow of air flowing in or out through the vents hole 700 may be partially guided by the air passages 910. For example, some of the air flowing in through the vent holes 700 may be guided by the air passages 910. When the air passages 910 are provided in an area corresponding to the printed circuit board 481, air flowing in through the vent holes 700 may move to the area corresponding to the printed circuit board 481. Since the air flowing in from the outside is air with a relatively low temperature, the printed circuit board 481 may be cooled by the air passing through the printed circuit board 481.

Referring to FIG. 9E, a shield can 930 may be disposed in a portion of the printed circuit board 481. In an embodiment, the shield can 930 may be made of a metal material with high thermal conductivity. The shield can 930 may be made of, for example, aluminum or an aluminum alloy material. The shield can 930 may be arranged to cover one area of the printed circuit board 481. In an embodiment, the shield can 930 may be arranged to cover the processor disposed on the printed circuit board 481.

According to various embodiments, a vapor chamber 920 may be disposed in at least a portion of the area corresponding to the printed circuit board 481. The vapor chamber 920 may be disposed on the first support 411 of the fixed housing 410 so that the vapor chamber 920 is at least partially disposed in an area corresponding to the printed circuit board 481. The vapor chamber 920 may contain a material that can be vaporized by heat. Since the heat transferred to the vapor chamber 920 is used to vaporize the material contained in the vapor chamber 920, cooling may be achieved by the vapor chamber 920. Referring to FIGS. 9D and 9E, at least a portion of the vapor chamber 920 may be disposed between the printed circuit board 481 and the first support 411. At least a portion of the vapor chamber 920 may be disposed between the shield can 930 covering the printed circuit board 481 and the first support 411.

In an embodiment, the air passages 910 may be provided in an area where the vapor chamber 920 is disposed in the first support 411. The air guided in the air passages 910 may be delivered to the vapor chamber 920. Cooling of the vapor chamber 920 may be achieved by the air delivered to the vapor chamber 920 through the air passages 910.

In various embodiments, heat generated by the operation of the electronic components disposed on the printed circuit board 481 may be cooled by being transferred to the shield can 930 covering the printed circuit board 481 and/or the vapor chamber 920 disposed in an area corresponding to the printed circuit board 481. In addition, the air may be guided to the printed circuit board 481 and the vapor chamber 920 through the air passages 910, thereby achieving cooling. For example, in the slide-out operation, external air flowing in through the vent holes 700 may be guided to the printed circuit board 481 and the vapor chamber 920 through the air passages 910, thereby performing cooling. In the slide-in operation, air heated by the printed circuit board 481 and the vapor chamber 920 may flow out to the outside by the air passages 910 and through the vent holes 700, thereby performing cooling.

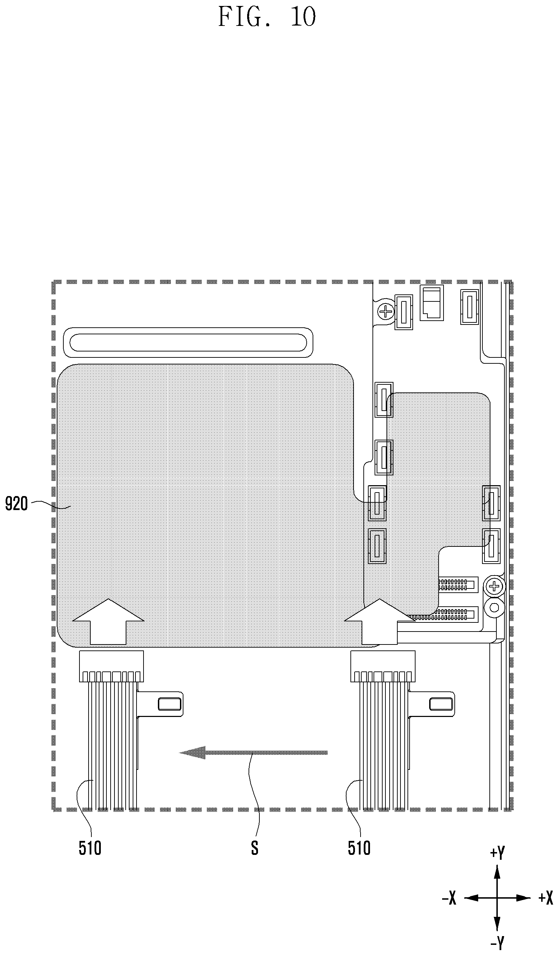

FIG. 10 is a view illustrating the relationship between the vapor chamber and the driving motor according to various embodiments disclosed herein.

According to various embodiments, the vapor chamber 920 may extend in one direction. The vapor chamber 920 may be provided to extend such that the vapor chamber can be disposed in a portion adjacent to the driving motor 510. Some of the heat generated due to the operation of the driving motor 510 may be transferred to the vapor chamber 920 so that cooling may be performed.

In addition, as illustrated in FIG. 10, the vapor chamber 920 may extend in the sliding direction S (the X-axis direction in FIG. 10 ) in the electronic device 400. When the driving motor 510 is fixed to the movable housing 420, the driving motor 510 may move along the sliding direction S during the sliding process in the electronic device 400. Since the vapor chamber 920 extends in the sliding direction S, the driving motor 510 may remain adjacent to the vapor chamber 920 even when the driving motor 510 moves due to the sliding in the electronic device 400. Accordingly, the heat generated from the driving motor 510 is continuously transferred to the vapor chamber 920 so that cooling of the driving motor 510 may be effectively achieved by the vapor chamber 920.

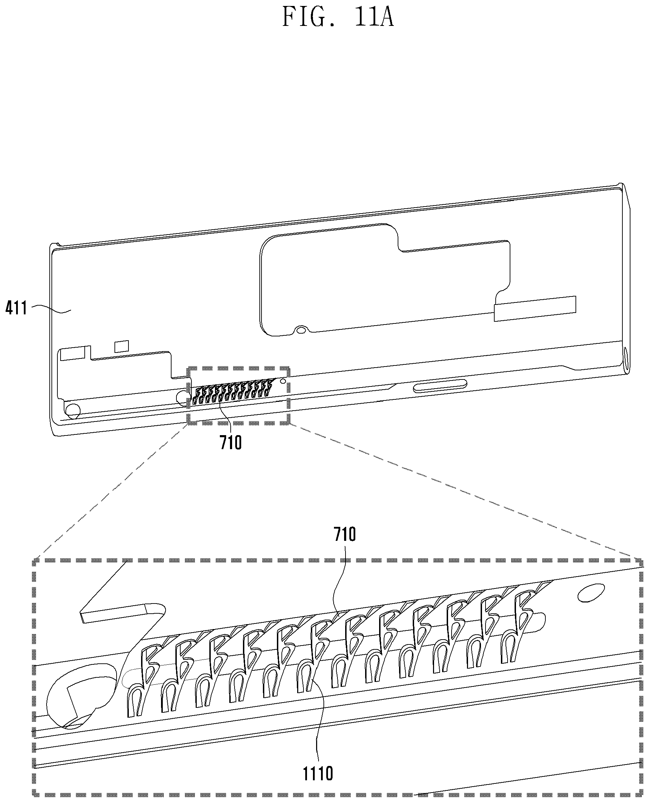

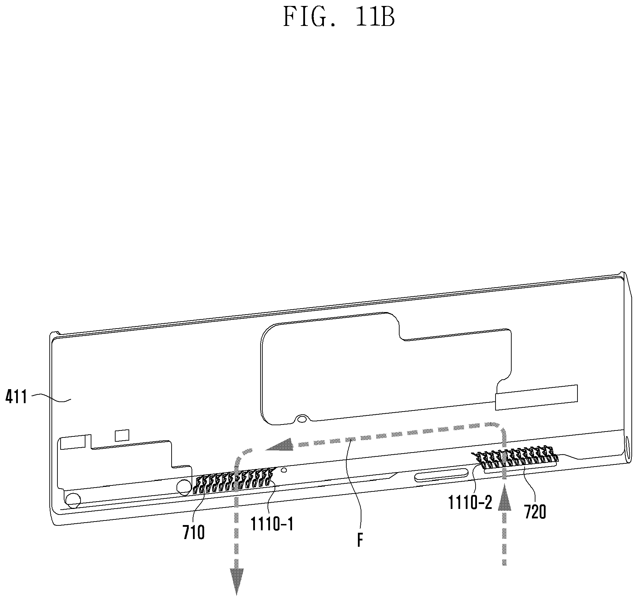

FIGS. 11A and 11B are views illustrating vent holes according to various embodiments disclosed herein.

According to various embodiments, a vent hole 700 may be provided in a shape that can determine the directions of gas entering and exiting the vent hole 700. For example, the vent hole 700 may include a Tesla valve 1110. The Tesla valve 1110 is a passage that is capable of guide the flow of air in one direction. When the vent hole 700 including the Tesla valve 1110 is provided in the rear cover 412 of the fixed housing 410, the direction of gas entering and exiting the vent hole 700 may be determined. For example, air may mainly flow out or air may mainly flow in through the vent hole 700.

In an embodiment, air may be allowed to flow in or out of vent holes 700 provided at different positions. For example, as illustrated in FIG. 11B, a Tesla valve 1110-1 may be provided to allow air to flow out through the first vent hole 710 disposed on one side of the printed circuit board 481, and a Tesla valve 1110-2 may be provided to allow air to flow in through the second vent hole 720 disposed on the other side of the printed circuit board 481. In this case, a flow of air F may be provided in which the air flowing in through the second vent hole 720 passes through the printed circuit board 481 and flows out through the first vent hole 710. In another embodiment, the Tesla valve 1110-1 may be configured to allow air to flow in through the first vent hole 710, and the Tesla valve 1110-2 may be configured to allow air to flow out through the second vent hole 720. In this case, a flow of air may be provided in which the air flowing in through the first vent hole 710 passes through the printed circuit board 481 and flows out through the second vent hole 720.

In some embodiments, the flow of air may be further guided by using the air passages 910 previously described with reference to FIGS. 9A to 9E. For example, as illustrated in FIG. 9C, the air passages 910 may be disposed such that one ends are adjacent to the first vent hole 710 and the other ends are adjacent to the second vent hole 720. In this case, by providing the Tesla valves 1110 in the vent holes 700, a flow of air may be formed in which the air flowing in through the first vent hole 710 moves along the air passages 910 and flows out through the second vent hole 720, or the air flowing in through the second vent hole 720 moves along the air passages 910 and flows out through the first vent hole 710.

In an embodiment, as illustrated in FIGS. 9B and 9C, when the air passages 910 are provided to pass through an area corresponding to the printed circuit board 481, a flow of air may pass through a portion adjacent to the printed circuit board 481 between the first vent hole 710 and the second vent hole 720. The printed circuit board 481 and various electronic components disposed on the printed circuit board 481 may be cooled by the flow of air passing through the printed circuit board 481.

In addition, the electronic device 400 may further include various components that are capable of guiding a flow of air flowing in or out through the vent holes 700.

For example, in response to the operation of the cooling fan 515 included in the previously described driving motor 510, a flow of air may occur in the internal space 401. A flow of air flowing in or out through the vent holes 700 may be formed depending on the direction of a flow of air determined by the cooling fan 515.

As another example, an ion wind generator (not illustrated) using a corona discharge principle may be used. The ion wind generator may be a device that causes ions generated by a high electric field in a corona generation area of a corona electrode during corona discharge to collide with air molecules in the process of acceleration toward an induction electrode and uses the movement of air molecules caused by the collision. The ion wind generator included in the electronic device 400 may actively form a flow of air flowing in or flowing out through the vent holes 700 by forming a flow of air in the internal space 401.

An electronic device (e.g., the electronic device 101 in FIG. 1, the electronic device 200 in FIGS. 2A and 2B, or the electronic device 400 in FIG. 4) according to various embodiments disclosed herein may include a fixed housing (e.g., the fixed housing 410 in FIG. 4), a movable housing (e.g., the movable housing 420 in FIG. 4) slidably coupled to the fixed housing, a driving motor (e.g., the driving motor 510 in FIG. 5) fixed to one of the fixed housing or the movable housing, a gear member (e.g., the gear member 520 in FIG. 5) fixed to the remaining one of the fixed housing or the movable housing and engaged with the driving motor, an internal space (e.g., the internal space 401 in FIG. 5) defined by the fixed housing and the movable housing and including a motor accommodation portion (e.g., the motor accommodation portion 401A in FIG. 5), a printed circuit board (e.g., the printed circuit board 481 in FIG. 5) including a processor (e.g., the processor 120 in FIG. 1) and disposed in the internal space, a vent hole (e.g., the vent hole 700 in FIG. 8) provided in at least one of the fixed housing and the movable housing and connected to the motor accommodation portion, and an external hole (e.g., the external hole 730 in FIG. 7B) connecting the vent hole to the outside of the electronic device.

In addition, the fixed housing may include a rear cover (e.g., the rear cover 412 in FIG. 4) and a cover member (e.g., the cover member 413 in FIG. 4) coupled to the rear cover, the vent hole may include an opening provided in the rear cover, and the external hole may include a slit-shaped hole provided between the rear cover and the cover member.

In addition, in the rear cover of the fixed housing, the portion where the vent hole is provided is concave compared to another portion so that a step may be formed between the portion where the vent hole is formed and the other portion.

In addition, the internal space may have a size capable of increasing or decreasing as the movable housing is slid relative to the fixed housing in response to the operation of the driving motor.

In addition, the driving motor may include a pinion gear, and the gear member may include a rack gear engaged with the pinion gear.

In addition, the fixed housing may include a support (e.g., the first support 411 in FIG. 4) that supports the printed circuit board, and a vapor chamber (e.g., the vapor chamber 920 in FIG. 9E) containing a material that vaporizes depending on a temperature rise may be at least partially disposed in an area of the support corresponding to the printed circuit board.

In addition, the driving motor may be fixed to the movable housing to move along a sliding direction of the movable housing, and the vapor chamber may be disposed to extend to a portion adjacent to the driving motor and may extend in the sliding direction to be adjacent to the driving motor even when the driving motor moves.

In addition, the support of the fixed housing may include an air passage (e.g., the air passage 910 in FIG. 9E) that is concavely provided in the support.

In addition, at least a portion of the air passage may be disposed in an area corresponding to the printed circuit board.

In addition, the driving motor may include a heat sink (e.g., the heat sink 514 in FIG. 6A) and a cooling fan (e.g., the cooling fan 515 in FIG. 6B) configured to dissipate heat generated by the driving motor, and the driving motor and the printed circuit board may be connected to each other by a heat dissipation sheet (e.g., the heat dissipation sheet 610 in FIG. 6C) made of a material with high thermal conductivity.

In addition, the vent hole may have a shape configured to determine the direction of gas entering and exiting the vent hole.

In addition, the vent hole may include a Tesla valve (e.g., the Tesla valve 1110 in FIG. 11A).

An electronic device (e.g., the electronic device 101 in FIG. 1, the electronic device 200 in FIGS. 2A and 2B, or the electronic device 400 in FIG. 4) according to various embodiments disclosed herein may include a fixed housing (e.g., the fixed housing 410 in FIG. 4), a movable housing (e.g., the movable housing 420 in FIG. 4) slidably coupled to the fixed housing, a driving motor (e.g., the driving motor 510 in FIG. 5) fixed to one of the fixed housing or the movable housing, a gear member (e.g., the gear member 520 in FIG. 5) fixed to the remaining one of the fixed housing or the movable housing and engaged with the driving motor, an internal space (e.g., the internal space 401 in FIG. 5) defined by the fixed housing and the movable housing and including a motor accommodation portion (e.g., the motor accommodation portion 401A in FIG. 5), a printed circuit board (e.g., the printed circuit board 481 in FIG. 5) including a processor (e.g., the processor 120 in FIG. 1) and disposed in the internal space, a first vent hole (e.g., the first vent hole 710 in FIG. 8) provided in at least one of the fixed housing and the movable housing and connected to the motor accommodation portion, a second vent hole (e.g., the second vent hole 720 in FIG. 8) provided in at least one of the fixed housing and the movable housing at a position different from the first vent hole and connected to the internal space, and an external hole (e.g., the external hole 730 in FIG. 7B) connecting the first vent hole and the second vent hole to the outside of the electronic device.

In addition, the first vent hole may be located in a first direction with respect to the printed circuit board, and the second vent hole may be located in a second direction opposite to the first direction with respect to the printed circuit board.

In addition, the fixed housing may include a rear cover (e.g., the rear cover 412 in FIG. 4) and a cover member (e.g., the cover member 413 in FIG. 4) coupled to the rear cover, the first vent hole and the second vent hole may each include an opening provided in the rear cover, the external hole may include a slit-shaped hole provided between the rear cover and the cover member.

In addition, in the rear cover of the fixed housing, the portion where the first vent hole and the second vent holes are provided is concave compared to another portion so that a step may be formed between the portion where the first vent hole and the second vent hole are provided and the other portion.

In addition, the driving motor may include a pinion gear, and the gear member may include a rack gear engaged with the pinion gear.

In addition, the fixed housing may include a support (e.g., the first support 411 in FIG. 4) that supports the printed circuit board, a vapor chamber (e.g., the vapor chamber 920 in FIG. 9E) containing a material that vaporizes depending on a temperature rise may be at least partially disposed in an area of the support corresponding to the printed circuit board, the driving motor may be fixed to the movable housing to move along a sliding direction of the movable housing, and the vapor chamber may be disposed to extend to a portion adjacent to the driving motor and may extend in the sliding direction to be adjacent to the driving motor even when the driving motor moves.

In addition, the support of the fixed housing may include an air passage (e.g., the air passage 910 in FIG. 9E) that is concavely provided in the support, and at least a portion of the air passage may be disposed in an area corresponding to the printed circuit board.

In addition, each of the first vent hole and the second vent hole may have shape configured to determine a direction of gas entering and exiting the vent hole, wherein the direction of gas entering and exiting the first vent hole and the direction of gas entering and exiting the second vent hole may be different from each other.

The embodiments disclosed in the specification and drawings are provided merely to easily describe the technical features according to the embodiments disclosed herein and to help understanding of the embodiments disclosed herein and are not intended to limit the scope of the embodiments disclosed herein. Therefore, the scope of the various embodiments disclosed herein should be construed as including, in addition to the embodiments disclosed herein, all changes or modifications derived based on the technical ideas of the various embodiments disclosed herein.

## Claims

1. An electronic device comprising:
a fixed housing;
a movable housing slidably coupled to the fixed housing;
a driving motor fixed to one of the fixed housing or the movable housing;
a gear member fixed to the remaining one of the fixed housing or the movable housing and engaged with the driving motor;
an internal space defined by the fixed housing and the movable housing and comprising a motor accommodation portion;
a printed circuit board comprising a processor and disposed in the internal space;
a vent hole provided in at least one of the fixed housing and the movable housing and connected to the motor accommodation portion; and
an external hole connecting the vent hole to an outside of the electronic device.

2. The electronic device of claim 1, wherein the fixed housing comprises a rear cover and a cover member coupled to the rear cover,
wherein the vent hole comprises an opening provided in the rear cover, and
wherein the external hole comprises a slit-shaped hole provided between the rear cover and the cover member.

3. The electronic device of claim 2, wherein, in the rear cover of the fixed housing, a portion where the vent hole is provided is concave compared to another portion so that a step is formed between the portion where the vent hole is provided and the another portion.

4. The electronic device of claim 1, wherein the internal space has a size capable of increasing or decreasing depending on sliding of the movable housing relative to the fixed housing in response to operation of the driving motor.

5. The electronic device of claim 3, wherein the driving motor comprises a pinion gear, and
wherein the gear member comprises a rack gear engaged with the pinion gear.

6. The electronic device of claim 2, wherein the fixed housing comprises a support that supports the printed circuit board, and
wherein a vapor chamber containing a material that vaporizes depending on a temperature rise is at least partially disposed in an area of the support that corresponds to the printed circuit board.

7. The electronic device of claim 6, wherein the driving motor is fixed to the movable housing to move along a sliding direction of the movable housing, and
wherein the vapor chamber is disposed to extend to a portion adjacent to the driving motor and extends in the sliding direction to be adjacent to the driving motor even in case that the driving motor moves.

8. The electronic device of claim 6, wherein the support of the fixed housing comprises an air passage concavely provided in the support.

9. The electronic device of claim 8, wherein at least a portion of the air passage is provided in an area corresponding to the printed circuit board.

10. The electronic device of claim 9, wherein the driving motor comprises a heat sink and a cooling fan configured to dissipate heat generated by the driving motor, and
wherein the driving motor and the printed circuit board are connected to each other by a heat dissipation sheet made of a material with high thermal conductivity.

11. The electronic device of claim 10, wherein the vent hole has a shape configured to determine a direction of gas entering and exiting the vent hole.

12. The electronic device of claim 11, wherein the vent hole comprises a Tesla valve.

13. The electronic device of claim 1, wherein the vent hole comprises a first vent hole provided in at least one of the fixed housing and the movable housing and connected to the motor accommodation portion, and a second vent hole provided in at least one of the fixed housing and the movable housing at a position different from the first vent hole and connected to the internal space, and
wherein the external hole connects the first vent hole and the second vent hole to the outside of the electronic device.

14. The electronic device of claim 13, wherein the first vent hole is located in a first direction with respect to the printed circuit board, and
wherein the second vent hole is located in a second direction opposite to the first direction with respect to the printed circuit board.

15. The electronic device of claim 13, wherein each of the first vent hole and the second vent hole has shape configured to determine a direction of gas entering and exiting the vent hole, and the direction of gas entering and exiting the first vent hole and the direction of gas entering and exiting the second vent hole are different from each other.
